# EUROPEAN PATENT SPECIFICATION

(11) **EP 1 834 099 B1**
(45) Date of publication and mention of the grant of the patent: **28.04.2010**
(21) Application number: 05821816.5
(22) Date of filing: 21.12.2005
(51) Int. Cl.: F16B 2/06, B25B 5/10, F16L 3/24

(54) **CLAMP HEAD**
KLEMMKOPF
TETE DE SERRAGE

(30) Priority: 23.12.2004 GB 0428223
(43) Date of publication of application: 19.09.2007
(73) Proprietor: EV IP LP, Dover, County of Kent, DE 19901 (US)
(72) Inventor: GILL, Neil Frank, Lindapter International, Bradford, Yorkshire BD7 2NF (GB)
(74) Representative: Gray, James
(86) International application number: PCT/GB2005/005002
(87) International publication number: WO 2006/067459

(56) References cited:
- DE-A1- 3 110 716
- DE-C1- 4 328 106
- DE-C1- 19 543 438
- US-A1- 2002 168 220

## Description

The present invention relates to a clamp head for use in fixing objects to rolled steel sections and a steel fixing incorporating such a clamp head.

In steelwork construction, it is common for adjacent steelwork sections, such as I-section, L-section and T-section girders, to be fixed together using a clamp-type arrangement. A typical clamp for fixing two steelwork sections together consists of a bolt extending through a pair of clamp heads and a nut threadingly engagable with the bolt for bringing the clamp heads together. In use, a steel fixer secures the sections of steelwork between the clamp heads by tightening the head of the bolt and the nut against their respective clamp head. Typically, this is a two handed operation, as the bolt head must be held in place as the nut is rotated.

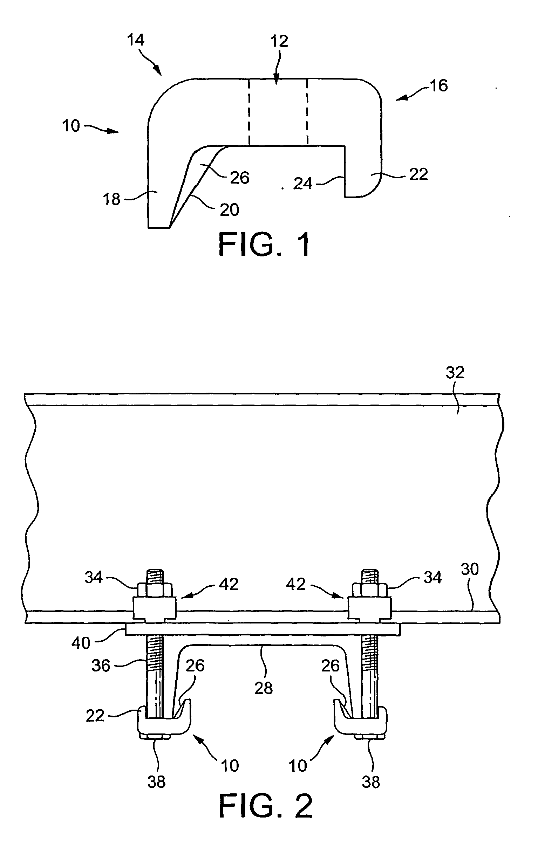

Clamp heads having a generally planar clamping surface are used for clamping a planar portion of a steelwork section, such as the upper flange of a T-section girder. An alternative form of clamp head is indicated generally at 10 in Figure 1, for use in engaging the edge of angle section of steelwork, such as the upwardly disposed edge of an L-section girder.

The clamp head 10 includes an aperture 12 for receiving a fixing bolt (not shown), which is offset from the central axis the clamp head 10. The position of the aperture 12 defines front and rear regions 14, 16 of the clamp head on opposing sides of the aperture 12.

The clamp head 10 is formed with two projections depending downwardly from its underside, as viewed: a nose 18 having an angled internal surface 20 depends from the front region 14; and a tail 22 having a vertical surface 24 depends from the centre of the rear region 18. A tooth 26 is formed as part of the angled surface 20 for biting engagement with a steel section.

Figure 2 shows a pair of clamp heads 10 being used on respective fixings for hanging a channel section 28 from the lower flange 30 of an I-section girder 32. Here, each fixing incorporates a nut 34 threadingly engaged on a bolt 36 having a head 38. A plate 40 is provided for engagement between the two steel sections and is formed with apertures (not visible in Figure 2) through which the bolts 36 extend.

Planar clamp heads of the type described above, indicated at 42, are used for engagement with the flange 30, whereas the profiled clamp heads 10 are used to engage the edges of the respective sides of the channel section 28. The fixings are shown in a clamped position, in which the nuts 34 are in clamping engagement with the planar clamp heads 42 and the bolts heads 38 are in clamping engagement with the profiled clamp heads 10.

The clamping effect of the profiled clamp heads 10 on the downwardly depending edges of the channel section 28 is much greater than would be achieved using the planar clamp heads 42 in the same position. It is also much easier to arrange each clamp head 10 at a desired position along the side walls of the channel section 28, between the nose 18 and the tail 22.

However, the illustrated forms of clamp head are not ideally suited for use in clamping a section of steelwork to an angle section which is upwardly disposed, as would be the case if the arrangement shown in Figure 2 was inverted, for example. For both clamp heads 10 and 42, it is impractical to try to balance the clamp head on an upwardly disposed edge. Hence, when installing the fixing, the clamp head in contact with the edge must manually supported, otherwise it would be likely to move or fall from its intended position. Not only does this reduce the efficiency of the fixing operation, but also the loss of such clamp heads is inevitable. This can be costly as well as particularly hazardous if the clamp heads fall from a significant height.

DE 4328106 is directed to a clamping jaw for a pipe securing means. The clamping jaw is provided in a U-shaped configuration bent from a plate of steel.

It is an object of the present invention to provide a clamp head and a fixing incorporating such a clamp head which reduces the problems discussed above.

According to a first aspect of the invention, there is provided a clamp head for use in steel fixing, the clamp head comprising:
an aperture for receiving a bolt or the like,
a bearing surface peripheral to the aperture for bearing against a bolt head or nut in a tightened position,
and wherein the clamp head is configured to be self-supporting on the edge of an angle or flange of a steel section, for maintaining the bearing surface in a plane generally orthogonal to the plane of the angle or flange, wherein further the aperture and bearing surface are arranged such that, in use, the shank of a bolt or the like extending through the aperture lies substantially parallel to, but spaced from, the angle or flange, characterised in that the aperture defines a tapering bore through the clamp head.

The invention is advantageous in that it provides a clamp head which can be self-supportingly positioned on the edge of a vertically disposed angle or flange of a section of steelwork or the like, during the clamping of two structural elements using steel fixings substantially of the type referred to above.

A clamp head in accordance with the invention obviates the problems associated with the prior art due to its self supporting nature, thereby significantly reducing the risk of the clamp head falling from its intended position, during installation.

The clamp head is further advantageous in that a bolt head or the like can be easily dropped down through the aperture in the orthogonally presented bearing surface, during installation of a fixing incorporating said clamp head.

Preferably, the clamp head defines a channel configured for receiving the edge of an angle or flange of a steel section, so as to be easily positionable on the section of steelwork.

Conveniently, the channel extends across the width of the clamp head, which enables the clamp head to be moved in sliding engagement along the edge of the angle or flange on which it is self-supported.

Preferably, the clamp head includes an alignment surface for aligning an axis of the aperture generally parallel to a planar region of the angle or flange.

In a preferred embodiment, the clamp includes a pair of ears depending from the clamp head. The ears are adapted to engage with a planar region of the angle or flange on which the clamp head is self-supported and preferably form part of the channel.

In a preferred embodiment the forward faces or edges of the ears are aligned with, or extend forward or slightly forward of the aperture. With this configuration a bolt or the like may extend through the aperture and not contact a flange or channel to which the clamp head is fitted. This isolation of the bolt from the flange or channel ensures that the bolt does not experience any reaction torque or bending moment as a result of contact with the flange or channel.

In a first embodiment, the clamp head comprises a one-piece casting, wherein a nose depends from a front region of the clamp head, the nose preferably forming part of the channel.

According to a further aspect of the invention, there is provided a steel fixing incorporating a clamp head in accordance with the first aspect of the invention.

Other preferred features and advantages of the invention will be readily apparent from the dependent claims, the description and the drawings.

The invention will now be described, by way of example only, with reference to the accompanying drawings, in which:
Figure 1 is a schematic side view of a known form of clamp head;
Figure 2 is a schematic view from the front of channel-section of steelwork hung from an I-section of steelwork by a pair of known steel fixings incorporating the clamp head of Figures 1;
Figure 3 is a schematic side view of a clamp head in accordance with a first preferred embodiment of the invention;
Figure 4 is a schematic view from the front of the clamp head shown in Figure 3;
Figure 5 is a schematic view from the rear of the clamp head shown in Figure 3;
Figure 6 is a schematic perspective view of the clamp head shown in Figures 3 to 5;
Figure 7 is a schematic perspective view of a channel-section of steelwork clamped to the upper surface of an I-section of steelwork by a pair of steel fixings incorporating the clamp head of Figures 3 to 6;
Figure 8A is a schematic view from the front of the arrangement shown in Figure 7;
Figure 8B is a schematic view from one end of the arrangement shown in Figure 7;
Figure 9 is a schematic plan view of a section of sheet material for use in forming a clamp head;
Figure 10 is a schematic perspective view of a clamp head made from the section of sheet material shown in Figure 9;
Figure 11 is a side view of an alternative embodiment of a clamp head according to the present invention;
Figure 12 is a top plan view of the clamp head of figure 11;
Figure 13 is a side view of a further alternative embodiment of a clamp head according to the present invention; and
Figure 14 is a rear view of the clamp head of figure 13.

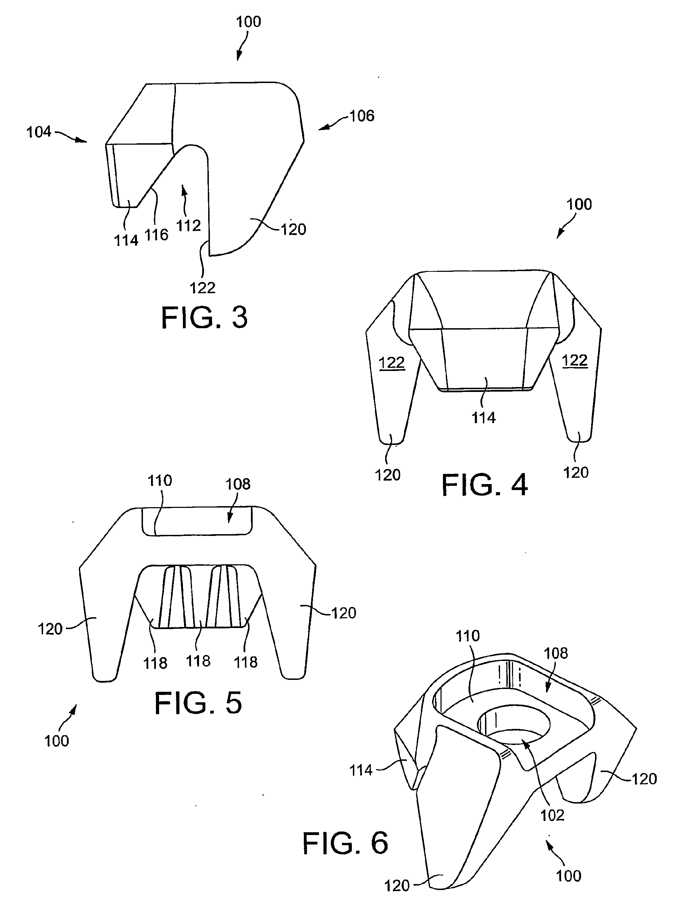

A clamp head according to a preferred embodiment of the invention is indicated at 100 in Figures 3 to 6. The clamp head 100 defines a body having an aperture 102 therethrough for receiving a fixing bolt (not shown). The aperture 102 is formed offset from the central axis of the member 100, and defines front and rear regions 104, 106 of the clamp head 100 on opposing sides of the aperture 102. Although not clearly apparent from the Figures, the diameter of the aperture 102 in the upper surface is smaller than the diameter in the lower surface, so as to define a tapering bore.

A recess 108 is formed in the upper surface of the clamp head 100 about the aperture 102 for receiving a bolt or a nut, in use. The recess 108 includes a bearing surface 110 for bearing against a bolt head or nut in a tightened position.

As can be seen most clearly in Figure 3, the clamp head defines a substantially J- or hook-shaped channel, when viewed from the side, indicated at 112. The channel 112 extends across the width of the clamp head 100 and is configured for receiving the edge of an angle or flange of a steel section, so as to be self-supporting, as will be described in more detail below.

A nose 114 depends from the front region 104 of the clamp head 100, similar to the nose 20 in Figure 1. The nose 114 consists of a single projection extending away from the aperture 102 and includes an internal surface 116 inclined relative to the axis of the aperture 102. A plurality of ridges, visible in Figure 5, are formed in the surface 114, to define teeth 118 for biting engagement with the edge and adjacent region of an angle or flange of a steel section, in use.

A pair of ears 120 depend from the clamp head 100 on opposing sides of the aperture 102. As can be seen clearly in Figure 3, the ears 120 depend a greater distance than the nose 114. Each car 120 includes a planar abutment surface 122 extending parallel to the axis of the aperture 102. The surfaces 122 are co-planar and are provided to abut against a planar region of an angle or flange, in use. It should be noted that the clamp head 100 is gravity loaded in the direction of the rear region 104, and the ears 120 prevent the clamp head 100 from pivoting relative to the angle or flange far enough to fall from the section of steelwork, in use.

The abutment surfaces 122 also act as an alignment surface for aligning the axis of the aperture 102 generally parallel to the plane of the angle or flange. In use, the ears 120 also maintain the bearing surface 110 in a plane generally orthogonal to the plane of a vertically disposed angle or flange.

The clamp head is formed as a one piece element, for example from forged carbon steel, ductile cast iron or aluminium alloy.

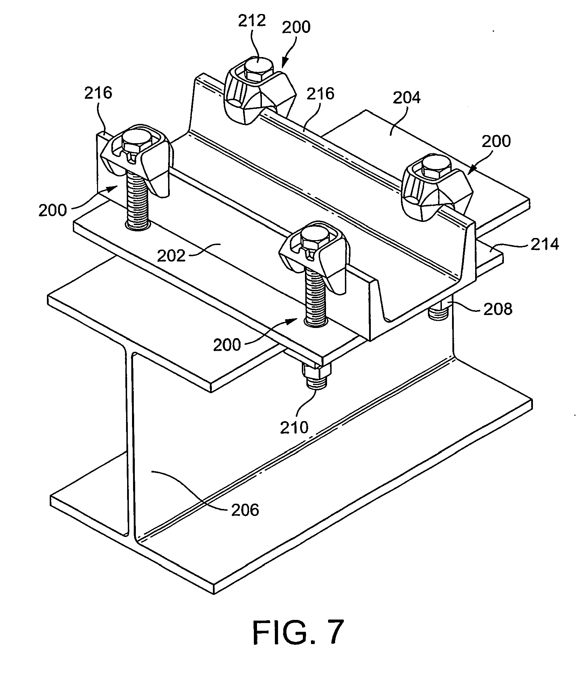

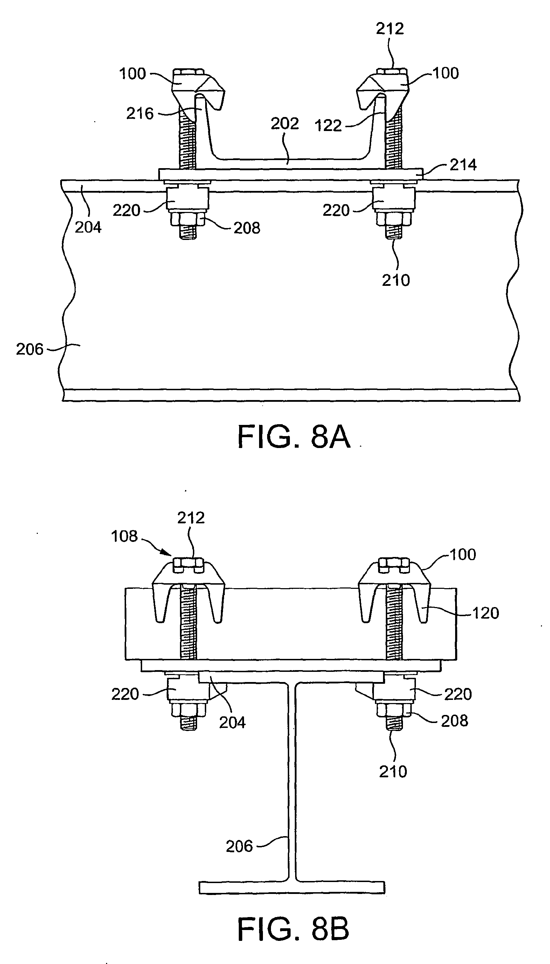

The clamp head 100 is particularly advantageous for use in fixing an angle section of steel work, such as the side walls of a channel section or L-section, to a planar surface. A preferred use of the clamp head 100 in a steel fixing will now be described with reference to Figures 7, 8A and 8B, indicated at 200, in which a steel channel section 202 is clamped to the flange 204 of a steel I-beam 206.

Four steel fixings 200 are shown, each incorporating a nut 208 threadingly engaged on a bolt 210 having a head 212. A plate 214 is provided for engagement between the two steel sections 202, 206, the plate having four apertures (not visible in the Figures) through which the bolts 210 extend, respectively.

Each fixing 200 also incorporates a planar clamp head of the type described above, indicated at 220, which is used for engagement with the I-beam flange 204, whereas the clamp heads 100 are used to engage respective edges 216 of the side walls 218 of the channel section 202.

The fixings 200 are shown in a clamped position, in which the nuts 208 are in clamping engagement with the planar clamp heads 220, and in which the bolts heads 212 are in clamping engagement with the bearing surface 110 in the recess 108 of the clamp heads 100.

To install the fixings 200, the plate 214 is first positioned between the two steel sections 202, 206. Each clamp head 100 can then be hooked simply over the vertically disposed edges 216, with a respective side wall 218 received in the J-shaped channel formed between the downwardly depending nose 114 and ears 120. More particularly, the clamp heads 100 are positioned with the noses 114 arranged on the inner side of the channel section 202.

So positioned, the clamp heads 100 are self supporting and can be readily moved along the side walls 218 to a desired position, in sliding engagement with the side walls 218.

The centre of gravity of the clamp heads 100 causes the distal ends of the ears 120 to pivot into contact with the side walls 218, so that the abutment surfaces 122 engage their respective side wall 218. This contact prevents the clamp heads 100 from pivoting excessively relative to the edge 216, thereby preventing the clamp heads 100 from falling from their self supported positions.

As referred to above, the abutment surfaces 122 also act as an alignment surface for aligning the axis of the aperture 102 in each clamp head 100 generally parallel to a planar region or plane of the angle or flange, which in this case is the side walls 218.

In their self supported position, the ears 120 also maintain the bearing surface 110 in a plane generally orthogonal to the plane of a vertically disposed angle or flange, so that the radial axis of the aperture 102 is substantially horizontal as viewed in Figures 7 to 8. This is particularly advantageous in that it enables the bolt 210 for each fixing 200 to be easily dropped into position through a respective aperture 102, during installation of the fixings 200, without any or with only minimal movement of the clamp heads 100.

The bolts 210 are then manoeuvred to extend through the apertures in the plate 40, so that the planar clamp heads 220 and nuts 208 can be coupled to the distal end of the bolts 210.

As will be apparent from Figure 8B, the recess 108 is configured for holding the bolt head 212 captive whilst the nut is tightened, i.e. so that a bolt head 212 can be suitably positioned in the recess 108 and thereby be prevented from rotation by the side walls of the recess 108.

This is advantageous in reducing the tightening operation of each fixing 200 to a one-handed operation, as the nut 208 is threaded on the distal end of the bolt 210. This enables the user to have one hand free for any minor adjustment of the fixing 200 on the steel sections 202, 206, for example. As the nut 208 is tightened, the planar clamp head 220 is moved upwardly into clamping engagement with the underside of the flange 204. This is carried out for each fixing 200 so as to tightly secure the channel section 202 to the I-section 206.

As tolerance between the two sections 202, 206 and the plate 40 is taken up during the tightening operation of the fixings 200, the underside of each bolt head 212 is brought into clamping engagement with a respective bearing surface 110. This brings the teeth 118 on the clamp heads 300 into biting engagement with edge 216 and/or a distal portion of the side walls 218.

If the diameter of the bolt head 212 is much smaller than the diameter of the recess 108 in the top of the clamp head 100, an adapter block of known construction (not illustrated) can be provided to sit in the recess, wherein the adapter has an internal recess of a diameter suitable for preventing rotation of the bolt head 212. In this case, the bearing surface 110 bears against the clamping force of the bolt head 212 via the adapter block.

It will, however, be appreciated that the clamp head need not necessarily be formed with a recess 108 and instead the bolt head 212 can be tightened directly against a planar upper surface of the clamp head, or onto an intermediate washer. In such cases, it is possible to pass a bolt 210 up through the clamp head, and to tighten the nut 208 onto the upper surface of the clamp head.

If the clamp head is formed without a recess 108, anti-rotation means can be provided on the upper surface to resist against rotation of a bolt head. For example, a plurality of projections can be formed about the aperture in the clamp head for engagement with a plurality of complimentarily formed recesses on the underside of a bolt head or nut, or vice versa.

It should also be noted that the aperture in the clamp head need not necessarily be circular, but may instead be shaped so as to co-operate with a complimentarily shaped portion of the shaft of a bolt, for preventing rotation of the bolt during tightening. For example, the aperture can be of an oval shape having a first diameter large enough to enable a circular section of a bolt shaft to extend therethrough, but also having a second diameter orthogonal to and greater than said first diameter. The second diameter is preferably configured for receiving an oval shaped section of a bolt shaft, whereby the non-circular nature of the aperture and shaft portion prevent rotation of said shaft when the oval shaft portion is received in the aperture.

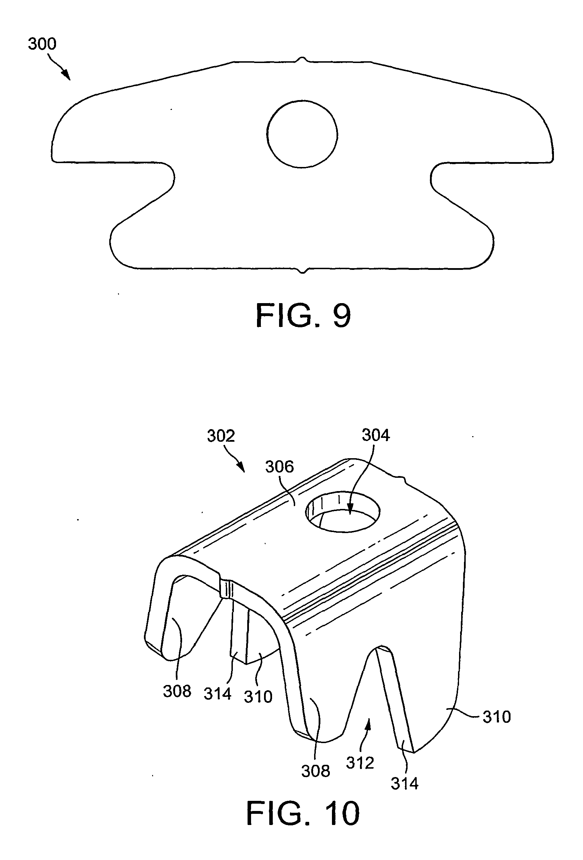

An alternative clamp head will now be described with reference to Figures 9 and 10.

A blank section of material is cut or stamped from a sheet of said material in the shape shown in Figure 9, indicated at 300. The blank is then formed into the clamp head configuration shown in Figure 10, indicated at 302, by bending.

The configuration of clamp head 302 and its use in a steel fixing is substantially the same clamp head 100 described above and will not be described in significant detail.

The clamp head 302 includes an aperture 304 and a bearing surface 306 peripheral to said aperture 304. However, the principal difference between clamp head 302 and clamp head 100 is that, instead of having a nose 114, clamp head 302 includes two pairs of ears, a front pair 308 and a rear pair 310. When viewed from the side, these form a channel 312 of substantially the same cross section as the channel 112 of clamp head 100.

The channel 112 is configured for receiving the edge of an angle or flange from a steel section, so that the clamp head 302 is capable of being self supported on a vertically disposed edge of an angle or flange of a steel work section.

The rear ears 310 each include an abutment surface 314 arranged for contact with a planar region of an angle or flange of a section of steelwork in much the same manner as the abutment surfaces 122 in Figures 3 to 6. The abutment surfaces 314 together define an alignment surface, for aligning the bearing surface 306 in a plane generally orthogonal to the plane of an angle or flange on which the clamp head is positioned, in use.

The clamp head 302 is installed in the same manner as clamp head 100 and will not be described in further detail.

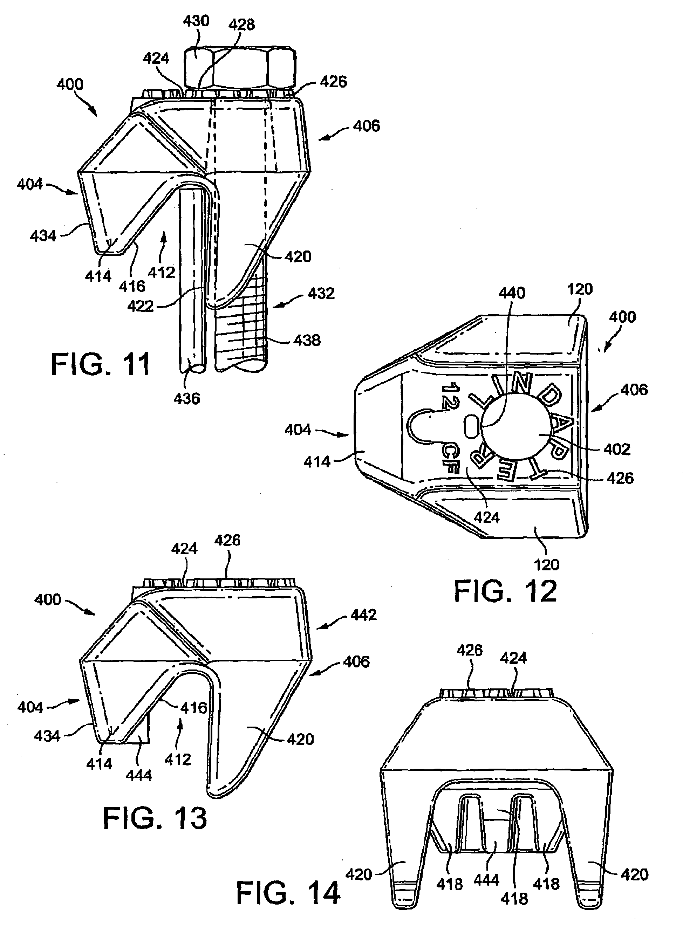

Referring now to figures 11 and 12 there is shown a further embodiment of a clamp head generally designated 400. Features common to the clamp head 100 described with reference to figures 3 to 6 are identified with similar three digit reference numerals prefixed 4 as opposed to 1.

The clamp head 400 differs in that it is not provided with a recess 108 and substantially flat bearing surface 110. Instead, the clamp head 400 is provided with a substantially planar upper surface 424 having a plurality of raised projections 426 surrounding the through aperture 402. Advantageously, the aperture 402 may be tapered, with the diameter thereof increasing through the body of the clamp head 402 from that shown in upper surface 424 in figure 12. This tapering of the aperture 402 permits a bolt 432 to be tilted and tipped slightly relative to the clamp head 400 so as to, for example, assist in alignment of the bolt 432 for the loose fitting of a nut thereto.

In the embodiment shown the projections 426 are in the form of letters which spell the word "Lindapter". It will be appreciated that other configurations of projections 426 may be provided which, for example, may spell another word. The projections 426 may, alternatively, comprise a plurality of projections 426 having a similar, regular shape such as, for examples rectangles.

In use, the projections 426 rest against the underside 428 of the head 430 of a bolt 432 which passes through the aperture 402. The projections 426 contact the underside 428 of the bolt head 430 and as the head 430 is urged against the clamp head 400 by the tightening of a nut to the bolt 432, and prevent rotation of the bolt 432 relative to the clamp head 400.

The forward face 434 of the nose 414 of the clamp head 400 is inclined towards the abutment surfaces 422.

As described above, figure 11 shows a bolt 432 extending through the aperture 402. Figure 11 further shows a flange 436 received in the channel 412 of the clamp head 400. The aperture 402 and abutment surfaces 422 of the clamp head are configured such that the shank 438 of the bolt 432 lies substantially parallel to, but spaced from, the flange 436. This is achieved by ensuring that the abutment surfaces 422 are aligned with, or project slightly forward of, the point 440 on the circumference of the aperture 402 closest to the nose 414 of the clamp head 400. Where the aperture 402 is tapered, the abutment surfaces 422 are aligned with, or project slightly forward of, the point 440 on the circumference of the smallest diameter of aperture 402 closest to the nose 414 of the clamp head 400. The spacing between the flange 436 and shank 438 is illustrated in an exaggerated sense for the purposes of illustration. It will be appreciated that by ensuring that the shank 438 does not contact the flange 436, the bolt 432 experiences only tensile forces as a result of the nut being applied thereto. The bolt 432 thus does not experience bending forces applied thereto as a result of the shank 438 bearing against the flange 436. This feature is common to the embodiments of the clamp head described with reference to all illustrated embodiments.

Figures 13 and 14 show a further embodiment of a clamp head generally designated 442. The clamp head 442 is similar to the head 400 described with reference to figures 11 and 12 and common features are identified with like reference numerals. The clamp 442 differs in that the central tooth 418 is provided with a projection 444 which extends into the channel 412 in the direction of the abutment surfaces 422. The presence of the tooth projection 444 limits the thickness of flange which can be received by the channel 412 and thus ensures that the clamp head 442 is not fitted to flanges having a thickness that is too great. It will be appreciated that such projections 444 may be provided on more than one tooth 418.

It will be appreciated that the invention is also suitable for use in securing construction elements other than steel sections to one another, such as timber sections and the like. The clamp heads in accordance with the invention are also suitable for use with all bolts, studs, tie rods and J bolts.

## Claims

1. A clamp head (100,200,400) for use in steel fixing, the clamp head (100,200,400) comprising:
an aperture (102,402) for receiving a bolt (210,432) or the like,
a bearing surface (110,424) peripheral to the aperture (102,402) for bearing against a bolt head (212,430) or nut (208) in a tightened position,
and wherein the clamp head (100,200,400) is configured to be self-supporting on the edge (216) of an angle or flange of a steel section (202,206), for maintaining the bearing surface (110,424) in a plane generally orthogonal to the plane of the angle or flange, wherein further the aperture (102,402) and bearing surface (110,424) are arranged such that, in use, the shank of a bolt (210,432) or the like extending through the aperture (102,402) lies substantially parallel to, but spaced from, the angle or flange, **characterised in that** the aperture (102,402) defines a tapering bore through the clamp head (100,200,400).

2. A clamp head (100,200,400) according to claim 1, wherein the clamp head (100,200,400) defines a channel (112,412) configured for receiving the edge (216) of an angle or flange of a steel section (202,206).

3. A clamp head (100,200,400) according to claim 2, wherein the channel (112,412) extends across the width of the clamp head (100,200,400).

4. A clamp head (100,200,400) according to any of claims 1 to 3, wherein the clamp head (100,200,400) includes an alignment surface for aligning an axis of the aperture (102,402) generally parallel to a planar region of the angle or flange.

5. A clamp head (100,200,400) according to any of claims 1 to 4, the aperture (102,402) defines a front region (104,404) and a rear region (106,406) of the clamp head (100,200,400), the clamp head (100,200,400) being gravity loaded in the direction of the rear region (106,406).

6. A clamp head (100,200,400) according to any preceding claim, wherein the clamp includes a pair of ears (120,420) depending from the clamp head (100,200,400).

7. A clamp head (100,200,400) according to claim 6, wherein the ears are arranged on opposing sides of the aperture (102,402).

8. A clamp head (100,200,400) according to claim 6 or 7, wherein each ear (120,420) includes an abutment surface (122,422) for abutting against a planar region of the angle or flange.

9. A clamp head (100,200,400) according to any preceding claim, wherein a nose (114,414) depends from a front region (104,404) of the clamp head (100,200,400).

10. A clamp head (100,200,400) according to claim 9, when dependent on any of claims 6 to 8, wherein the ears (120,420) depend a greater distance from the clamp head (100,200,400) than the nose (114,414).

11. A clamp head (100,200,400) according to claim 9 or claim 10, wherein the nose (114,414) comprises single projection extending away from the aperture (102,402).

12. A clamp head (100,200,400) according to claim 11, wherein the nose (114,414) includes an inclined surface (116,416) for engagement with a planar region of the angle or the flange.

13. A clamp head (100,200,400) according to claim 12, wherein one or more teeth (118,418) are formed on in the inclined surface for biting engagement with the planar region of the angle or the flange.

14. A clamp head (100,200,400) according to any preceding claim, in which the clamp head (100,200,400) includes a recess (108) peripheral to the aperture (102,402) for receiving a nut (208) or the head (212,430) of a bolt (210,432).

15. A clamp head (100,200,400) according to claim 14, wherein the recess (108) is configured for receiving an adapter intermediate a nut (208) or the head (212,430) of a bolt (210,432).

16. A clamp head (100,200,400) according to claim 14 or claim 15, wherein the recess (108) is configured for resisting rotation of the head (212,430) of a bolt (210,432) or nut (208) received therein.

17. A clamp head (100,200,400) according to any of claims 1 to 13 wherein the clamp head (100,200,400) includes a plurality of projections (426) peripheral to the aperture (102,402) arranged to receive the underside of a bolt head (430), in use.

18. A clamp head (100,200,400) according to any preceding claim, further comprising a one-piece casting.

19. A clamp head (100,200,400) according to claim 9 or claim 10, wherein the nose (114,414) comprises a pair of projections depending from a front region (104,404) of the clamp head (100,200,400) on either side of the aperture (102,402).

20. A steel fixing incorporating a clamp head (100,200,400) according to any previous claim.

## Patentansprüche

1. Klammer (100, 200, 400) zur Verwendung bei der Fixierung von Stahlteilen, mit
- einer Bohrung (102, 402) zur Aufnahme eines Bolzens (210, 432) oder dergleichen,
- einer die Bohrung (102, 402) umgebenden Auflagefläche (110, 424) für einen Bolzenkopf (212, 430) oder eine Mutter (208) in gespanntem Zustand,
wobei die Klammer (100, 200, 400) selbsttragend - auf der Kante (216) eines Winkels oder Flansches eines Stahlprofils (202, 206) - ausgebildet ist, um die Auflagefläche (110, 424) in einer Ebene rechtwinklig zur Ebene des Winkels oder Flansches zu halten,
wobei weiterhin die Bohrung (102, 402) und die Auflagefläche (110, 424) derart angeordnet sind, dass im Gebrauch der Schaft eines die Bohrung (102, 402) durchsetzenden Bolzens (210, 432) oder dergleichen in im Wesentlichen parallelen Abstand von dem Winkel oder Flansch liegt,
**dadurch gekennzeichnet, dass**
die Bohrung (102, 402) sich verjüngend durch die Klammer (100, 200, 400) verläuft.

2. Klammer (100, 200, 400) nach Anspruch 1, mit einem Kanal (112, 412) zur Aufnahme der Kante (216) eines Winkels oder Flansches eines Stahlprofils (202, 206).

3. Klammer (100, 200, 400) nach Anspruch 2, bei welcher der Kanal (112, 412) sich über die Breite der Klammer (100, 200, 400) erstreckt.

4. Klammer (100, 200, 400) nach einem der Ansprüche 1 bis 3, mit einer Ausrichtungsfläche zum Ausrichten der Achse der Bohrung (102, 402) generell parallel zu einem ebenen Bereich des Winkels oder Flansches.

5. Klammer (100, 200, 400) nach einem der Ansprüche 1 bis 4, bei welcher die Bohrung (102, 402) einen Vorderbereich (104, 404) und einen Rückbereich (106, 406) der Klammer definiert und die Klammer (100, 200, 400) in Richtung des Rückbereichs (106, 406) schwerkraftbelastet ist.

6. Klammer (100, 200, 400) nach einem der vorstehenden Ansprüche, mit einem Paar Ohren (120, 420), welche von der Klammer nach unten ragen.

7. Klammer (100, 200, 400) nach Anspruch 6, bei welcher die Ohren auf gegenüberliegenden Seiten der Bohrung (102, 402) angeordnet sind.

8. Klammer (100, 200, 400) nach Anspruch 6 oder 7, bei welcher jedes Ohr (120, 420) eine Anlagefläche (122, 124) zur Anlage gegen einen ebenen Bereich des Winkels oder Flansches aufweist.

9. Klammer (100, 200, 400) nach einem der vorstehenden Ansprüche, bei welcher von dem Vorderbereich (104, 404) der Klammer (100, 200, 400) eine Nase (114, 414) herabhängt.

10. Klammer (100, 200, 400) nach Anspruch 9 in Abhängigkeit von einem der Ansprüche 6 bis 8, bei welcher die Ohren (120, 420) um einen größeren Abstand als die Nase (114, 414) von der Klammer herunterreichen.

11. Klammer (100, 200, 400) nach Anspruch 9 oder 10, bei welcher die Nase (114, 414) einen von der Bohrung (102, 402) wegragenden einzigen Vorsprung aufweist.

12. Klammer (100, 200, 400) nach Anspruch 11, bei welcher die Nase (114, 414) eine geneigte Oberfläche (116, 416) zum Angreifen an einem ebenen Bereich des Winkels oder Flansches aufweist.

13. Klammer (100, 200, 400) nach Anspruch 12, bei welcher an der geneigten Oberfläche einer oder mehrere Zähne (118, 418) zum Eingreifen an dem ebenen Bereich des Winkels oder Flansches angeformt sind.

14. Klammer (100, 200, 400) nach einem der vorstehenden Ansprüche, mit einer um die Bohrung (102, 402) herumlaufenden Ausnehmung (108) zur Aufnahme einer Mutter (208) oder des Kopfes (212, 430) eines Bolzens (210,432).

15. Klammer (100, 200, 400) nach Anspruch 14, bei welcher die Ausnehmung (108) für die Aufnahme eines Adapters zwischen einer Mutter (208) oder des Kopfes (212, 430) eines Bolzens (210, 432) ausgebildet ist.

16. Klammer (100, 200, 400) nach Anspruch 14 oder 15, bei welcher die Ausnehmung (108) derart ausgebildet ist, dass sie eine Drehung des in ihr aufgenommenen Kopfes (212, 430) eines Bolzens (210, 432) oder Mutter (208) verhindert.

17. Klammer (100, 200, 400) nach einem der Ansprüche 1 bis 13, mit einer Mehrzahl von um die Bohrung (102, 402) herum derart angeordneten Vorsprüngen (426), dass sie im Betrieb an der Unterseite eines Bolzenkopfes (430) angreifen.

18. Klammer (100, 200, 400) nach einem der vorstehenden Ansprüche, bestehend aus einem einteiligen Gussstück.

19. Klammer (100, 200, 400) nach Anspruch 9 oder 10, bei welcher die Nase (114, 414) ein Paar Vorsprünge aufweist, die von einem Vorderbereich (104, 404) der Klammer (100, 200, 400) auf beiden Seiten der Bohrung (102, 104) nach unten ragen.

20. Stahlteilverbindung mit einer Klammer (100, 200, 400) nach einem der vorstehenden Ansprüche.

## Revendications

1. Tête de serrage (100, 200, 400) destinée à être utilisée dans une fixation d'acier, la tête de serrage (100, 200, 400) comprenant :
une ouverture (102, 402) pour recevoir un boulon (210, 432) ou analogue,
une surface d'appui (110, 424) périphérique à l'ouverture (102, 402) pour prendre appui contre une tête de boulon (212, 430) ou un écrou (208) dans une position serrée,
et dans laquelle la tête de serrage (100, 200, 400) est configurée pour être autoportante sur le bord (216) d' un angle ou d' une bride d'une section en acier (202, 206), pour maintenir la surface d'appui (110, 424) dans un plan généralement orthogonal au plan de l'angle ou de la bride, dans laquelle en outre l'ouverture (102, 402) et la surface d' appui (110, 424) sont agencées de sorte que, durant l'utilisation, la tige d'un boulon (210, 432) ou analogue s'étendant à travers l'ouverture (102, 402) soit sensiblement parallèle à, mais espacée de, l'angle ou la bride, **caractérisée en ce que** l'ouverture (102, 402) définit un alésage tronconique à travers la tête de serrage (100, 200, 400).

2. Tête de serrage (100, 200, 400) selon la revendication 1, dans laquelle la tête de serrage (100, 200, 400) définit une gorge (112, 412) configurée pour recevoir le bord (216) d' un angle ou d' une bride d' une section en acier (202, 206).

3. Tête de serrage (100, 200, 400) selon la revendication 2, dans laquelle la gorge (112, 412) s'étend sur la largeur de la tête de serrage (100, 200, 400) .

4. Tête de serrage (100, 200, 400) selon une quelconque des revendications 1 à 3, dans laquelle la tête de serrage (100, 200, 400) comprend une surface d'alignement pour aligner un axe de l'ouverture (102, 402) de façon généralement parallèle à une région plane de l'angle ou de la bride.

5. Tête de serrage (100, 200, 400) selon une quelconque des revendications 1 à 4, dans laquelle l'ouverture (102, 402) définit une région avant (104, 404) et une région arrière (106, 406) de la tête de serrage (100, 200, 400), la tête de serrage (100, 200, 400) étant chargée par gravité dans la direction de la région arrière (106, 406).

6. Tête de serrage (100, 200, 400) selon une quelconque revendication précédente, dans laquelle la tête de serrage comprend une paire d'oreilles (120, 420) dépendant de la tête de serrage (100, 200, 400).

7. Tête de serrage (100, 200, 400) selon la revendication 6, dans laquelle les oreilles sont agencées sur des côtés opposés de l'ouverture (102, 402) .

8. Tête de serrage (100, 200, 400) selon la revendication 6 ou 7, dans laquelle chaque oreille (120, 420) comprend une surface de butée (122, 422) pour être en butée contre une région plane de l'angle ou la bride.

9. Tête de serrage (100, 200, 400) selon une quelconque revendication précédente, dans laquelle un nez (114, 414) dépend d'une région avant (104, 404) de la tête de serrage (100, 200, 400).

10. Tête de serrage (100, 200, 400) selon la revendication 9, lorsqu'elle dépend d'une quelconque des revendications 6 à 8, dans laquelle les oreilles (120, 420) dépendent de la tête de serrage (100, 200, 400) selon une distance supérieure à celle du nez (114, 414).

11. Tête de serrage (100, 200, 400) selon la revendication 9 ou la revendication 10, dans laquelle le nez (114, 414) comprend saillie unique s'étendant pour s'éloigner de l'ouverture (102, 402).

12. Tête de serrage (100, 200, 400) selon la revendication 11, dans laquelle le nez (114, 414) comprend une surface inclinée (116, 416) destinée à entrer en prise avec une région plane de l'angle ou de la bride.

13. Tête de serrage (100, 200, 400) selon la revendication 12, dans laquelle une ou plusieurs dents (118, 418) sont formées dans la surface inclinée pour entrer en prise mordante avec la région plane de l'angle ou de la bride.

14. Tête de serrage (100, 200, 400) selon une quelconque revendication précédente, dans laquelle la tête de serrage (100, 200, 400) comprend un évidement (108) périphérique à l'ouverture (102, 402) pour recevoir un écrou (208) ou la tête (212, 430) d'un boulon (210, 432).

15. Tête de serrage (100, 200, 400) selon la revendication 14, dans laquelle l'évidement (108) est configuré pour recevoir un adaptateur entre un écrou (208) ou la tête (212, 430) d'un boulon (210, 432).

16. Tête de serrage (100, 200, 400) selon la revendication 14 ou la revendication 15, dans laquelle l'évidement (108) est configuré pour résister à la rotation de la tête (212, 430) d'un boulon (210, 432) ou d'un écrou (208) reçu dans celui-ci.

17. Tête de serrage (100, 200, 400) selon une quelconque des revendications 1 à 13 dans laquelle la tête de serrage (100, 200, 400) comprend une pluralité de saillies (426) périphériques à l'ouverture (102, 402) agencées pour recevoir la sous-face d'une tête de boulon (430), lors de l'utilisation.

18. Tête de serrage (100, 200, 400) selon une quelconque revendication précédente, comprenant en outre une pièce coulée monobloc.

19. Tête de serrage (100, 200, 400) selon la revendication 9 ou la revendication 10, dans laquelle le nez (114, 414) comprend une paire de saillies dépendant d'une région avant (104, 404) de la tête de serrage (100, 200, 400) de chaque côté de l'ouverture (102, 402).

20. Fixation en acier incorporant une tête de serrage (100, 200, 400) selon une quelconque revendication précédente.
